**Europäisches Patentamt**

**European Patent Office**

**Office européen des brevets**

(19)

(11) Publication number: **0 085 139**
**A1**

(12) # EUROPEAN PATENT APPLICATION

(21) Application number: **82109189.9**

(22) Date of filing: **05.10.82**

(51) Int. Cl.³: **G 01 N 1/24**

(30) Priority: **14.01.82 DE 8200740 U**

(43) Date of publication of application:
**10.08.83 Bulletin 83/32**

(84) Designated Contracting States:
**BE DE FR GB**

(71) Applicant: **Krupp Polysius AG**
**Graf-Galen-Strasse 17**
**D-4720 Beckum(DE)**

(72) Inventor: **Weber, Rudolf**
**Elisabethstrasse 37**
**D-4740 Oelde 1(DE)**

(74) Representative: **Tetzner, Volkmar, Dr.-Ing. Dr. Jur.**
**Van-Gogh-Strasse 3**
**D-8000 München 71(DE)**

(54) High-temperature gas sampling probe.

(57) Die Heißgas-Entnahmesonde (1) basiert auf dem Prinzip einer Wasserstrahlpumpe. Diese Sonde (1) enthält eine im Sondenkörper (3) angeordnete Injektordüse (6), wenigstens einen mit der Einlaßseite (6a) dieser Düse (6) in Verbindung stehenden ersten Kanal (8) zur Wasserzuführung sowie wenigstens einen im Sondenkörper (3) vorgesehenen, das entnommene Heißgas (5) führenden zweiten Kanal (12), der vom Umfang des Sondenkörpers ausgeht und zur Austrittsseite (6b) der Düse (6) führt. Die Sonde erhält dadurch einen relativ einfachen und kompakten Aufbau.

./...

EP 0 085 139 A1

FIG. 1

## Sonde zur Entnahme von Heißgas

Die **Erfindung** betrifft eine Sonde zur Entnahme von Heißgas, basierend auf dem Prinzip einer Wasserstrahlpumpe.

Um bei Ofenanlagen, insbesondere Drehrohrofenanlagen, Heißgasproben entnehmen zu können, ist es aus der Praxis bereits bekannt, eine Sonde zu verwenden, von der ein Probeentnahmerohr in einen Gas führenden Raum des Ofens hineinragt, während der außerhalb des Gas führenden Raumes befindliche Abschnitt der Sonde einen Leitungsteil besitzt, in dem verschiedene Armaturen angeordnet sind und der mit einer Wasserstrahlpumpe in der Weise in Verbindung steht, daß im Gasentnahmerohr ein Unterdruck entsteht, durch den eine Gasprobe angesaugt und zu einem Abscheider gefördert wird, in dem die entnommene Gasprobe von beigemischter Flüssigkeit getrennt und einem Analysiergerät zugeführt wird, in dem die Heißgasprobe hinsichtlich bestimmter Bestandteile analysiert wird. Bei dieser bekannten Ausführungsform besitzt die Entnahmesonde eine verhältnismäßig große Anzahl von Teilen, die außerhalb des Heißgas führenden Raumes anzuordnen sind und innerhalb einer entsprechenden Verkleidung untergebracht werden müssen.

Der Erfindung liegt die Aufgabe zugrunde, eine Sonde der eingangs genannten Art zu schaffen, die bei äußerst zuverlässiger Betriebsweise relativ einfach und kompakt aufgebaut ist.

Erfindungsgemäß wird dies durch folgende Merkmale erreicht:

a) Eine im Sondenkörper angeordnete Injektordüse,

b) wenigstens einen im Sondenkörper vorgesehenen, mit der Einlaßseite dieser Düse in Verbindung stehenden ersten Kanal zur Wasserzuführung und

c) wenigstens einen im Sondenkörper vorgesehenen, das entnommene Heißgas führenden zweiten Kanal, der vom Umfang des Sondenkörpers ausgeht und zur Austrittsseite der Düse führt.

Während bei der zuvor erläuterten bekannten Sonde eine verhältnismäßig große Anzahl von Sondenelementen und Armaturen in einem äußeren Leitungsteil eingebaut ist, können bei der erfindungsgemäßen Ausführungsform weitgehend alle wesentlichen Sondenteile innerhalb oder im unmittelbaren Bereich des Sondenkörpers vorgesehen werden. Insbesondere die Anordnung der Injektordüse innerhalb des Sondenkörpers mit den zugehörigen Kanälen bringt ein äußerst wirksames und sehr zuverlässiges Entnehmen und Abführen der gewünschten Heißgasprobe mit sich. Die Ausführung des Sondenkörpers mit den darin ausgebildeten Elementen bringt eine sehr raumsparende, kompakte Bauweise der Sonde mit sich, so daß diese außerdem recht einfach hergestellt und montiert werden kann.

Weitere Ausgestaltungen der Erfindung sind Gegenstand
von Unteransprüchen.

Im folgenden sei die Erfindung anhand einiger bevorzugter, in der Zeichnung veranschaulichter Ausführungsbeispiele näher beschrieben. Es zeigen

Fig.1    einen Längsschnitt durch die Heißgas-Ent-
         nahmesonde gemäß einer ersten Ausführungs-
         form, einschließlich zusätzlicher Einrich-
         tungsteile für Wasserabscheidung und Gasanalyse;

Fig.2    einen Querschnitt durch das vordere Ende der
         Entnahmesonde längs der Linie II-II in Fig.1;

Fig.3    einen Längsschnitt lediglich durch den Sondenkörper eines zweiten Ausführungsbeispieles.

Die im folgenden anhand der Ausführungsbeispiele
beschriebene und in der Zeichnung veranschaulichte
Gasentnahmesonde ist vor allem für eine Heißgas-
Probenentnahme bei Drehrohrofen- oder ähnlichen
Ofenanlagen bestimmt, in denen das Heißgas stets mit
einem gewissen Staubanteil beladen ist.

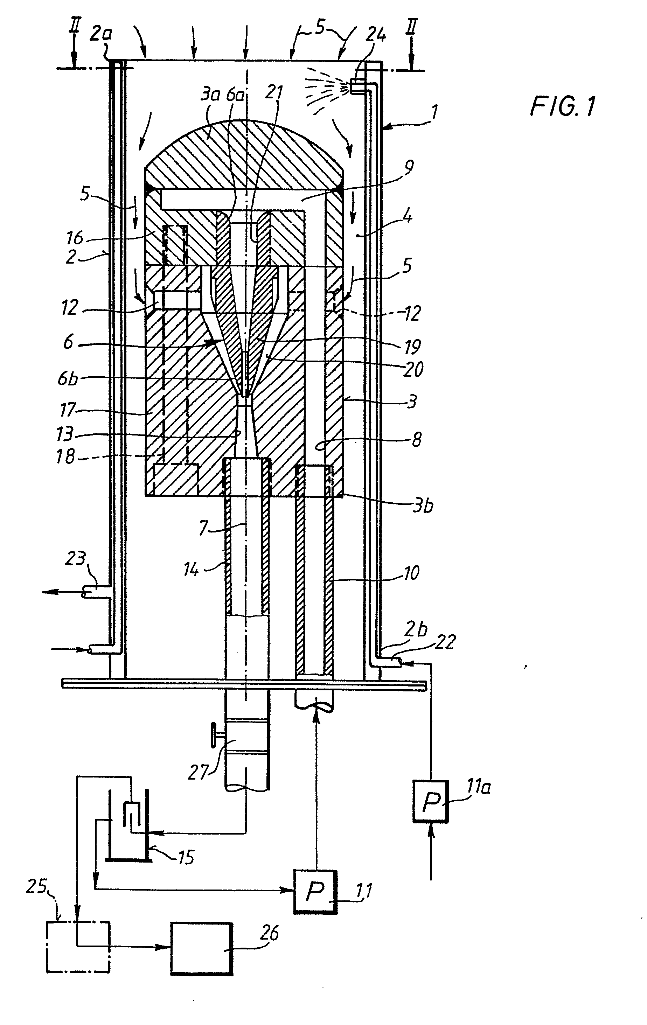

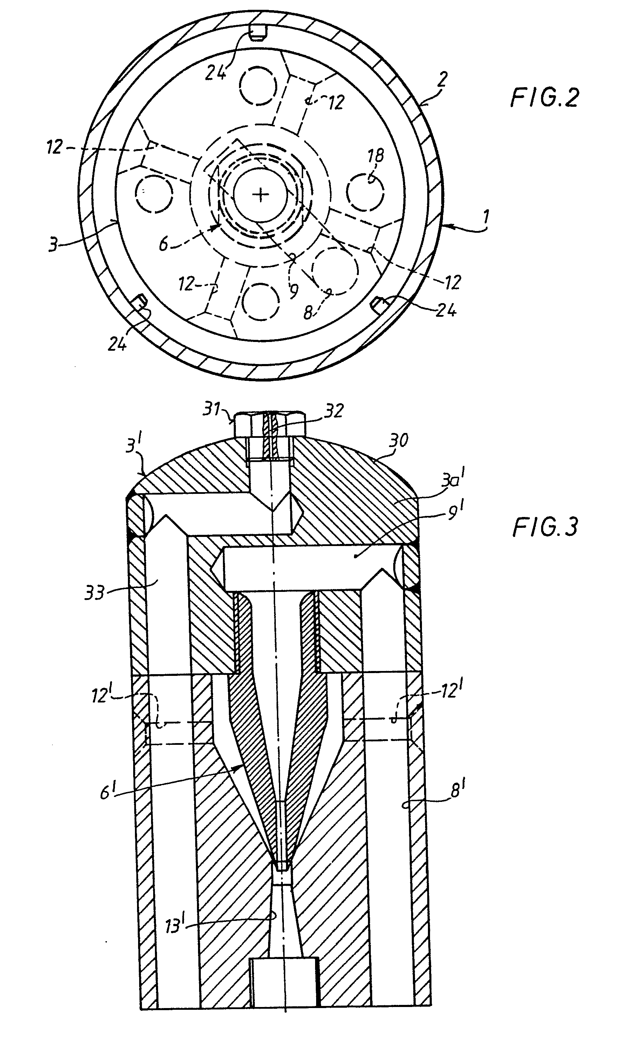

Bei dem in den Fig.1 und 2 veranschaulichten ersten
Ausführungbeispiel besitzt die Heißgas-Entnahmesonde 1 ein rohrförmiges Sondengehäuse 2 und einen darin
mit Umfangsabstand koaxial angeordneten Sondenkörper
3, der vorzugsweise eine zylindrische Form besitzt.
Das vordere Ende 2a des Sondengehäuses 2 ist vollkommen offen ausgebildet und steht gegenüber dem vorderen Ende bzw. Probeentnahmeende 3a des Sondenkörpers 3 axial vor. Zusammen mit dem Sondenkörper 3 begrenzt das Sondengehäuse 2 einen im Querschnitt ringförmigen Raum 4, der im folgenden als Leitkanal für eine einströmende Heißgasprobe (Pfeile 5) bezeichnet wird.

Im Sondenkörper 3 ist eine Injektordüse 6 zentral angeordnet und axial ausgerichtet, d.h. die Längsachse der Düse 6 fällt mit der gemeinsamen Längsachse von Düsenkörper 3 und Sondengehäuse 2 und somit mit der Sondenlängsachse 7 zusammen.

Im Düsenkörper 3 ist - wie gezeichnet - zumindest ein erster Kanal 8 zur Wasserzuführung vorgesehen, dessen inneres Ende über einen Verteilerraum 9 mit der Einlaßseite 6a der Düse 6 in Verbindung steht, während an das äußere Ende dieses ersten Kanales 8, und zwar am hinteren Stirnende 3b ein Wasserzuführrohr 10 angeschlossen ist, das entweder an eine mit normalem Leitungsdruck arbeitende Wasserleitung oder an die Druckseite einer im Kreislauf arbeitenden Pumpe 11 angeschlossen ist.

Im Düsenkörper 3 ist ferner wenigstens ein zweiter Kanal 12 vorgesehen, vorzugsweise sind mehrere, in diesem Ausführungsbeispiel vier zweite Kanäle 12 in Form von etwa radialen Bohrungen in den Sondenkörper 3 eingearbeitet. Diese zweiten Kanäle 12 verlaufen dabei von der Außenumfangsseite des Sondenkörpers 3 zur Injektordüse 6, und zwar zu deren Austrittsseite 6b, wobei diese zweiten Kanäle 12 dazu bestimmt sind, das in den ringförmigen Leitkanal 4 eingeströmte Heißgas der Injektordüse 6 zuzuführen. Eine gleichmäßige Zuführung der entnommenen Heißgasprobe zur Injektordüse 6 gewährleistet die gleichmäßige Verteilung der vier zweiten Kanäle 12 über den Umfang des Sondenkörpers 3, wobei die Bohrungen für diese zweiten Kanäle 12 im Bereich des Außenumfangs des Sondenkörpers 3 zweckmäßig noch - vgl. Fig.2 - trichterförmig nach außen erweitert sind.

Im Sondenkörper 3 ist ferner noch ein dritter Kanal 13 vorgesehen, der von der Austrittsseite 6b der Injektordüse 6 axial nach außen, d.h. zum hinteren Stirnende 3b des Sondenkörpers 3 geführt ist. Dieser dritte Kanal 13 ist in Form einer Bohrung ausgebildet und koaxial im Sondenkörper 3 sowie zur Injektordüse 6 angeordnet. Dieser dritte Kanal 13, der über ein Verbindungsrohr 14 an einen äußeren, nur angedeuteten Wasserabscheider 15 angeschlossen ist, dient zum Abführen des sich am Übergang zwischen der Düsenaustrittsseite 6b und dem dritten Kanal 13 bildenden Gas-Wasser-Gemisches, wie später noch näher erläutert wird.

Um die innere Ausbildung des Sondenkörpers 3 sowie dessen leichte Bearbeitbarkeit sicherzustellen, ist dieser Sondenkörper 3 über seine Länge quergeteilt ausgebildet, d.h. im veranschaulichten Ausführungsbeispiel (vgl. Fig.1) ist dieser Sondenkörper 3 zumindest im Bereich der Injektordüse 6 quergeteilt, wobei die dadurch gebildeten Körperteile 16 und 17 durch mehrere über den Querschnitt verteilte und axial in den Sondenkörper 3 eingesetzte Schrauben 18 fest miteinander verschraubt sind. Besonders strömungsgünstig wirkt sich die Ausbildung des vorderen Probeentnahmeendes 3a des Sondenkörpers 3 in Form einer Kugelkalotte aus; dieses kugelkalottenförmige Probeentnahmeende 3a kann als weiteres Teilstück des vorderen Körperteiles 16 ausgebildet sein und den dort vorhandenen Verteilerraum 9 stirnseitig abdecken, wobei es stirnseitig auf den vorderen Körperteil 16 aufgeschweißt ist.

Die Injektordüse 6 wird im wesentlichen durch einen mit der Eintrittsseite 6a im Bereich des Probeentnahmeendes 3a bzw. im vorderen Körperteil 16 befestigten Düsenkörper 19 und einen den Düsenkörper 19 umgebenden Ringraum 20 gebildet, der im hinteren Körperteil 17 des Sondenkörpers 3 vorhanden ist und in dem die zweiten Kanäle 12 radial ausmünden. Die Außenumfangsform des Düsenkörpers 19 ist so, daß sie etwa in Richtung auf die Einlaßseite 6a im wesentlichen zylindrisch und in Richtung auf die Austrittsseite 6b konisch ist. Auch der den Düsenkörper 19 umgebende Ringraum 20 ist in ähnlicher Weise ausgebildet, wobei sich dieser Ringraum 20 jedoch in Richtung auf die Düsenaustrittsseite 6b injektorartig verengt und wobei die engste Injektordüsenstelle im Übergangsbereich vom Ringraum 20 zum dritten Kanal 13 liegt. Innerhalb des Düsenkörpers 19 ist ferner eine sich in Richtung der Düsenaustrittsseite 6b in üblicher Weise injektorartig verengende Bohrung 21 für die Wasserzuführung vorgesehen. An der Düsen-Einlaßseite 6a ist der Düsenkörper 19 direkt in den Körperteil 16 eingeschraubt.

Da die Sonde 1 in einem Heißgas führenden Raum angeordnet wird, ist es zweckmäßig, das Sondengehäuse 2 aus entsprechendem Material herzustellen. Des weiteren wird es für vorteilhaft angesehen, dieses rohrförmige Sondengehäuse 2 zumindest in seinem dem Heißgas ausgesetzten vorderen Abschnitt, vorzugsweise auf seiner ganzen Länge, zu kühlen. Zu diesem Zweck ist das Sondengehäuse 2 in üblicher Weise mit einem Doppelmantel oder mit eingebauten Kühlleitungen versehen, so daß über einen Anschluß 22 vorzugsweise Kühlwasser zugeführt werden kann, das über einen zweiten Anschluß 23 wieder abgeführt wird.

Da ferner - wie weiter oben bereits erwähnt - diese Sonde 1 bevorzugt für die Entnahme von staubhaltigen Heißgasproben verwendet wird, wird es ferner für vorteilhaft angesehen, im Bereich vor dem Probeentnahmeende 3a des Sondenkörpers 3, d.h. also auch im Bereich vor dem Leitkanal 4, eine zumindest grobe Staubabscheidung vorzusehen. Im Beispiel der Fig.1 sind dazu am Innenumfang des vorderen Sondengehäuseendes 2a mehrere Flachstrahldüsen 24 verteilt angeordnet, und zwar sind bei diesem Ausführungsbeispiel - vgl. Fig.2 - drei Flachstrahldüsen 24 etwa vollkommen radial (bzw. etwa rechtwinklig) oder spitzwinklig zur Sondenlängsachse 7 ausgerichtet. Diese Flachstrahldüsen 24 werden vorzugsweise mit Wasser bzw. Kühlwasser gespeist, so daß [sich] am vollkommen offenen vorderen Ende 2a des Sondengehäuses gewissermaßen eine sich über den ganzen Gehäuse-Querschnitt erstreckende und zum Teil der einströmenden Heißgasprobe (Pfeile 5) entgegengerichtete Filterwand ausbildet, die zumindest einen Großteil des in der Heißgasprobe enthaltenen Staubes vom Leitkanal 4 und somit von den zweiten (Eintritts-) Kanälen 12 und dem Ringkanal 20 der Injektordüse 6 fern hält. Die Ausbildung der Sonde 1 mit mehreren Flachstrahldüsen 24 hat sich besonders für stark staubhaltige Gase als äußerst wirksam erwiesen.

Während des Betriebes wird der Sonde 1 mit Hilfe der Pumpe 11 über das Wasserzuführrohr 10, den ersten Kanal 8, den Verteilerraum 9 und die Injektordüse 6 Wasser mit einem solchen Druck (z.B. etwa 10 bar) zugeführt, daß sich die bekannte Injektorwirkung über die Düsenaustrittsseite 6b, den Ringraum 20 und die radialen zweiten Kanäle 12 in der Weise auswirkt, daß die dem Leitkanal 4 zugeströmte Heißgasprobe (Pfeil 5) sich mit dem zugeführten Wasser mischt und dieses Gemisch über den dritten Kanal 13 und das Verbindungsrohr 14 im Wasserabscheider 15 zugeleitet wird, in dem in bekannter Weise die Heißgasprobe und das Wasser voneinander getrennt werden, woraufhin die Heißgasprobe, ggf. unter Zwischenschaltung eines Gaskühlers 25, einem bekannten Analysiergerät 26 zugeführt wird, in dem die Heißgasprobe beispielsweise auf CO-, NO- und ggf. auch auf $CO_2$-Gehalt untersucht werden kann.

In dem in Fig. 1 veranschaulichten Ausführungsbeispiel wird es vorgezogen, das dem ersten Kanal 8 zugeführte Wasser im Kreislauf über die Pumpe 11 zu führen, wobei es im Wasserabscheider 15 von der Staubprobe befreit wird. Hierdurch kann eine Verfälschung der Gasprobe (für die Analyse) durch das Injektorwasser weitgehend vermieden werden.

Für die Kühlwasserzuführung für das Sondengehäuse 2 und evtl. auch für die Wasserzuführung zu den Flachstrahlendüsen 24 wird vorzugsweise eine gesonderte Pumpe 11a benutzt.

Ferner ist es zweckmäßig, dem das Gas-Wasser-Gemisch führenden dritten Kanal 13 ein Absperrventil zuzuordnen. Im Beispiel der Fig.1 ist ein solches Absperrventil 27 im Verbindungsrohr 14 des dritten Kanales
13 eingebaut. Durch die Anordnung dieses Absperrventiles 27 besteht die Möglichkeit, dieses Absperrventil 27 im Bedarfsfalle zu schließen, so daß dann
das über den ersten Kanal 8 der Düse 6 zugeführte
Wasser gezwungen wird, über die radialen zweiten Kanäle 12 in den Leitkanal 4 nach außen auszutreten, wodurch insbesondere diese zweiten Kanäle 12 auf einfache Weise gereinigt werden können.

Hinsichtlich der Ausbildung und Anordnung des ersten
Kanales 8 und des dritten Kanales 13 sei noch erwähnt,
daß diese Kanäle weitgehend durch axiale und parallel
zueinander verlaufende Bohrungen im Sondenkörper 3
gebildet sein können, wobei der dritte Kanal 13 sich
zum Verbindungsrohr 14 hin konisch erweitert.
Während beim Ausführungsbeispiel gemäß den Fig. 1
und 2 die Staubabscheidung am vorderen Ende 2a des
Sondengehäuses 2 mit Hilfe der am Gehäuseinnenumfang
verteilt angeordneten Flachstrahldüsen 24 erreicht
wird, kann es gemäß einer zweiten Ausführungsform
der Sonde auch bereits ausreichend sein, im Zentrum
der gewölbten Stirnseite 30 des Probeentnahmeendes
3a' vom Sondenkörper 3' eine mit Flüssigkeit gespeiste
Staubabscheide-Sprühdüse 31 bekannter Ausführung einzuschrauben, deren Düsenbohrung 32 axial zum Sondenkörper 3' ausgerichtet ist, wie es in Fig.3 veranschaulicht ist. Von diesem weiteren Ausführungsbeispiel der Sonde ist in Fig.3 lediglich der Sondenkörper 3' veranschaulicht, der bis auf die Sprühdüse 31 und den in ihm ausgebildeten vierten Flüssigkeitskanal 33 gleichartig ausgebildet sein kann wie im Beispiel der Fig.1 und 2, weshalb auch etwa gleichartige Teile mit denselben Bezugzeichen unter Beifügung eines Striches versehen sind. Während also die Injektordüse 6', der erste Kanal 8', der Verteilerraum 9', die Injektordüse 6', die radialen zweiten Kanäle 12' und der dritte Kanal 13' für das Abführen des Gas-Wasser-Gemisches in gleicher Weise wie beim ersten Ausführungsbeispiel im Sondenkörper 3' angeordnet und ausgebildet sind, ist lediglich der durch axiale und radiale Bohrungen im Sondenkörper 3 ausgebildete vierte Flüssigkeitskanal 33 zusätzlich eingearbeitet. Die Staubabscheide-Sprühdüse 31 ist dabei zweckmäßig so ausgebildet, daß die aus ihr austretende Flüssigkeit (insbesondere Wasser) sich als Vollkegel ausbreitend entgegen dem einströmenden Heißgas versprüht wird.

Bei dieser Ausführungsform (Fig.3) wird es darüber hinaus vorgezogen, das Probeentnahmeende 3a' im wesentlichen einstückig (nicht mit gesondert aufgeschweißtem kalottenförmigen Endstück, wie bei Fig.1) auszubilden, wobei lediglich die erforderlichen Querbohrungen - wie in Fig.3 angedeutet - durch eingeschweißte Plättchen nach außen geschlossen sind.

Patentansprüche:

1. Sonde zur Entnahme von Heißgas, basierend auf dem Prinzip einer Wasserstrahlpumpe, g e k e n n z e i c h n e t   durch

   a) eine im Sondenkörper (3, 3') angeordnete Injektordüse (6, 6'),

   b) wenigstens einen im Sondenkörper (3, 3') vorgesehenen, mit der Einlaßseite (6a) dieser Düse in Verbindung stehenden ersten Kanal (8, 8') zur Wasserzuführung,

   c) wenigstens einen im Sondenkörper (3, 3') vorgesehenen, das entnommene Heißgas (5) führenden zweiten Kanal (12, 12'), der vom Umfang des Sondenkörpers ausgeht und zur Austrittsseite (6b) der Düse führt.

2. Sonde nach Anspruch 1, dadurch gekennzeichnet, daß im Sondenkörper (3, 3') ein das Gas-Wasser-Gemisch führender dritter Kanal (13, 13') vorgesehen ist, der von der Austrittsseite (6b) der Injektordüse (6, 6') etwa axial nach außen geführt ist.

3. Sonde nach den Ansprüchen 1 und 2, dadurch gekennzeichnet, daß die Injektordüse (6, 6') im Sondenkörper (3, 3') zentral angeordnet und axial ausgerichtet ist.

4. Sonde nach den Ansprüchen 1 und/oder 3, dadurch gekennzeichnet, daß der Sondenkörper (3, 3') ein etwa kugelkalottenförmiges Probeentnahmeende (3a, 3a') sowie mehrere für die Heißgasführung bestimmte zweite Kanäle (12, 12') aufweist, die im wesentlichen radial von der Außenumfangsseite des Sondenkörpers zur Injektordüse (6, 6') verlaufen.

5. Sonde nach Anspruch 4, dadurch gekennzeichnet, daß die zweiten Kanäle (12, 12') über den Umfang des Düsenkörpers (3, 3') gleichmäßig verteilt sind.

6. Sonde nach den Ansprüchen 4 und/oder 5, dadurch gekennzeichnet, daß der Sondenkörper eine etwa zylindrische Form besitzt und zumindest im Bereich der Injektordüse (6) quergeteilt ist.

7. Sonde nach Anspruch 6, dadurch gekennzeichnet, daß die Injektordüse (6) im wesentlichen durch einen mit der Eintrittsseite (6a) der Düse im Bereich des Probeentnahmeendes (3a) des Sondenkörpers (3) befestigten Düsenkörper (19) und einen den Düsenkörper umgebenden Ringraum (20) gebildet ist, der im übrigen Teil (17) des Sondenkörpers vorhanden ist und in dem der zweite Kanal (12) radial ausmündet.

8. Sonde nach wenigstens einem der vorhergehenden Ansprüche, dadurch gekennzeichnet, daß der Sondenkörper (3) in einem mit Umfangsabstand von ihm vorgesehenen, rohrförmigen, gekühlten Sondengehäuse (2) umgeben ist, dessen vorderes Ende (2a) gegenüber dem Probeentnahmeende (3a) des Sondenkörpers (3) axial vorsteht und das zusammen mit dem Sondenkörper einen im Querschnitt ringförmigen Leitkanal (4) für die Heißgasprobe (5) bildet.

9. Sonde nach Anspruch 8, dadurch gekennzeichnet, daß im Zentrum der gewölbten Stirnseite (30) des Probeentnahmeendes (3a') vom Sondenkörper (3') eine mit Flüssigkeit gespeiste Staubabscheide-Sprühdüse (31) angeordnet ist, deren Düsenbohrung (32) axial zum Sondenkörper ausgerichtet ist.

10. Sonde nach Anspruch 8, dadurch gekennzeichnet, daß im Bereich vor dem Probeentnahmeende (3a) des Sondenkörpers (3) mehrere zur Staubabscheidung bestimmte Flachstrahldüsen (24) am Innenumfang des vorderen Sondengehäuseendes (2a) verteilt angeordnet und etwa radial zur Sondenlängsachse (7) ausgerichtet sind.

11. Sonde nach Anspruch 2, dadurch gekennzeichnet, daß dem das Gas-Wasser-Gemisch führenden dritten Kanal (13) ein Absperrventil (27) zugeordnet ist.

12. Sonde nach Anspruch 2, dadurch gekennzeichnet, daß der erste und der dritte Kanal (8, 8', 13, 13') weitgehend durch axiale Bohrungen im Sondenkörper (3, 3') gebildet sind.

FIG. 1

*FIG.2*

*FIG.3*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-2 460 122  (STEAG AG)<br>* Anspruch 1 ; Figur 2 *<br><br>--- | 1,3 | G 01 N   1/24 |
| Y | US-A-3 680 388  (D. CRITCHLEY et al.)<br>* Ansprüche 8, 9 ; Figur 1 * | 1,3 | |
| A | * Figuren 2, 3 *<br><br>--- | 2,4,5 | |
| A | US-A-4 008 620  (K. NARATO et al.)<br>* Figur 10 *<br><br>----- | 1,3 | |

|   |
|---|
| RECHERCHIERTE SACHGEBIETE (Int. Cl. ³) |
| G 01 N   1/24 |

Der vorliegende Recherchenbericht wurde für alle Patentansprüche erstellt.

| Recherchenort<br>BERLIN | Abschlußdatum der Recherche<br>06-04-1983 | Prüfer<br>SCHWARTZ K |
|---|---|---|